Europäisches Patentamt

European Patent Office

Office européen des brevets

(19)

(11) Veröffentlichungsnummer : **0 059 361**
**B1**

(12) **EUROPÄISCHE PATENTSCHRIFT**

(45) Veröffentlichungstag der Patentschrift :
16.06.87

(21) Anmeldenummer : **82101114.5**

(22) Anmeldetag : **16.02.82**

(51) Int. Cl.⁴ : **B 62 D 33/06**, B 60 J 1/18

(54) **Rückfenster für Fahrerkabine.**

(30) Priorität : 26.02.81 DE 3107208

(43) Veröffentlichungstag der Anmeldung :
08.09.82 Patentblatt 82/36

(45) Bekanntmachung des Hinweises auf die Patenterteilung : 16.06.87 Patentblatt 87/25

(84) Benannte Vertragsstaaten :
**AT DE FR GB IT SE**

(56) Entgegenhaltungen :
FR-A- 2 225 606
FR-A- 2 452 568
GB-A- 1 160 005
GB-A- 1 513 025
US-A- 2 771 133
US-A- 2 815 243
US-A- 3 486 273
US-A- 3 866 969
US-A- 4 116 483

(73) Patentinhaber : **DEERE & COMPANY**
**1 John Deere Road**
**Moline Illinois 61265 (US)**

(72) Erfinder : **Saemann, Karl Ludwig, Dipl.-Ing.**
**Am Rosensteiner Hang 11**
**D-6720 Speyer (DE)**

(74) Vertreter : **Feldmann, Bernhard et al**
**DEERE & COMPANY European Office, Patent Department Steubenstrasse 36-42 Postfach 503**
**D-6800 Mannheim 1 (DE)**

EP 0 059 361 B1

## Beschreibung

Die Erfindung bezieht sich auf ein Rückfenster für eine Fahrerkabine eines landwirtschaftlichen Schleppers mit einer waagrecht verlaufenden, als Gelenk ausgebildeten Fensterteilung, wobei beide Fensterteile im geschlossenen Zustand an einem Rahmen anliegen und beim Öffnen das obere Fensterteil um eine obere Drehachse nach oben bewegbar ist und die Unterkante des unteren Fensterteils in mindestens einer an der Längsseite des Rahmens befestigten Führungsvorrichtung geführt ist.

Bei einem bekannten Rückfenster (Prospekt für Ford Traktoren TW- 10, TW- 20, TW- 30, Druckvermerk TWBR/80/D. 3.0m. CH. 0.5m. A. 1.0m) ist bereits eine Teilung des Rückfensters in einen oberen und unteren Fensterteil gegeben, wobei der untere um etwa 180° auf den oberen geschwenkt werden kann und keine Zwischenstellung aufweist. Das heißt, ein dosiertes Öffnen des unteren Fensterteils ist nicht möglich. Hinzu kommt, daß der Fahrer, um den unteren Fensterteil öffnen zu können, entweder die Kabine verlassen oder äußerst schwierige Hand- und Armbewegungen ausführen muß, da er dann den unteren Fensterteil zu hintergreifen hat. Gleiches gilt für das Schließen des unteren Fensterteils.

Bei dem Rückfenster, von dem die Erfindung ausgeht (FR-A- 2 452 568) sind beim Öffnen des Rückfensters zunächst beide Fensterteile gemeinsam und in einer Ebene um die obere Drehachse in eine erste Position nach rückwärts schwenkbar, in der sich eine Öffnung und damit ein Zugriff zu der Hubspindel des Dreipunktgestänges ergibt. Danach wird bei einem weiteren Schwenken um die obere Drehachse der untere Fensterteil zwangsläufig entgegen dem Uhrzeigerdrehsinn um das Gelenk geklappt, bis er fast oben auf dem oberen Fensterteil aufliegt. Bei diesem Schwenkvorgang muß zum Beispiel ein an den Ackerschlepper angebauter Pflug auf den Boden abgesenkt werden, weil sein Pflugkopf sonst die ausladende Klappbewegung nicht gestatten würde.

Die mit der Erfindung zu lösende Aufgabe wird darin gesehen, ein dosiertes Öffnen, insbesondere des unteren Fensterteils, in einfacher Weise von einer Bedienungsperson in der Fahrerkabine zu ermöglichen.

Diese Aufgabe ist dadurch gelöst worden, daß die Führungsvorrichtung ortsfest angeordnet und die Unterkante des unteren Fensterteils in der Führungsvorrichtung verschiebbar ist. Auf diese Weise wird die Unterkante des unteren Fensterteils beim Öffnen zwangsgeführt, wobei sich das Gelenk von dem Kabinengrundrahmen entfernt und mit diesem und den Fensterteilen ein Dreieck bildet. Luft kann dann durch den Bereich unter der Unterkante und der Seiten des Dreiecks strömen. Zum Öffnen und Schließen braucht — sofern dieser Vorgang nicht durch Fremdkraft erfolgt — lediglich der obere Fensterteil manuell nach außen geschoben oder nach innen gezogen zu werden. Dies kann bereits durch Hochziehen oder Niederdrücken einer Klinke erfolgen, die zum Verschließen des unteren Fensterteils in der geschlossenen Position dient. Im ganzen gesehen kann somit der untere Fensterteil jede beliebige Position im Bereich der Führungsvorrichtung einnehmen, wobei die Bedienungsperson in der Kabine den unteren Fensterteil ohne Mühe leicht verstellen kann.

Zweckmäßig können die Fensterteile und der Rahmen eine montierbare Einheit bilden, die mit vorbereiteten Anschlüssen zum dichten Aufbringen auf den rückseitigen Kabinengrundrahmen versehen sind.

Vorteilhaft weist nach der Erfindung die Unterkante des unteren Fensterteils seitlich links und rechts herausragende Führungsteile für Schlittenführungen auf, die in der aus zwei U-förmigen Schienen bestehenden Führungsvorrichtung verschiebbar sind.

Erfindungsgemäß kann die Führungsvorrichtung einen Teil des Rahmens einer ebenflächigen Baueinheit bilden und parallel zum rückseitigen Kabinengrundrahmen verlaufen.

Andererseits ist es nach der Erfindung auch möglich, daß die beiden Fensterteile in ihrer Grundstellung mit dem ebenflächigen Rahmen einen nach außen gerichteten Winkel von etwa 10 bis 30 Grad bilden, wobei die dementsprechend gebildeten, etwa die Form eines gleichseitigen Dreiecks aufweisenden Seitenflächen vorzugsweise verglast sind und die Spitze des Dreiecks mit dem Gelenk zusammen fällt. Hierbei kann sich die Führungsvorrichtung zumindest von der Unterkante des unteren Fensterteils bis zur Spitze des Dreiecks erstrecken.

Sollte an besonders warmen Tagen oder aus anderen Gründen die Offenstellung des unteren Fensterteils nicht ausreichen, so wird ferner vorgeschlagen, daß der Rahmen mit den Fensterteilen um einen oberen in Kabinendachnähe befindlichen Anschluß vertikal verschwenkbar und ausstellbar ist. Auf diese Weise lassen sich der obere und untere Fensterteil als Einheit in eine Offenstellung verschwenken. Schließlich kann der untere Fensterteil im Bereich der Führungsvorrichtung stufenlos höhenverstellbar sein und die Öffnung und Bewegung des Fensters durch einen Kraftantrieb erfolgen.

Eine besonders elegante Lösung ist erreichbar, wenn der obere Fensterteil teilweise in den Kabinendachbereich einschiebbar ist.

Im folgenden werden zwei Ausführungsbeispiele der Erfindung anhand der Zeichnungen beschrieben. Es zeigt :

Figur 1 eine ebenflächige Ausführungsform für das Rückfenster,

Figur 2 eine gewinkelte Ausführungsform für das Rückfenster,

Figur 3 drei verschiedene Positionen der ebenflächigen Ausführungsform,

Figur 4 drei verschiedene Zustände der winkeligen Ausführungsform,

Figur 5 drei verschiedene Zustände der winkeligen Ausführungsform in einer Schiebevariante.

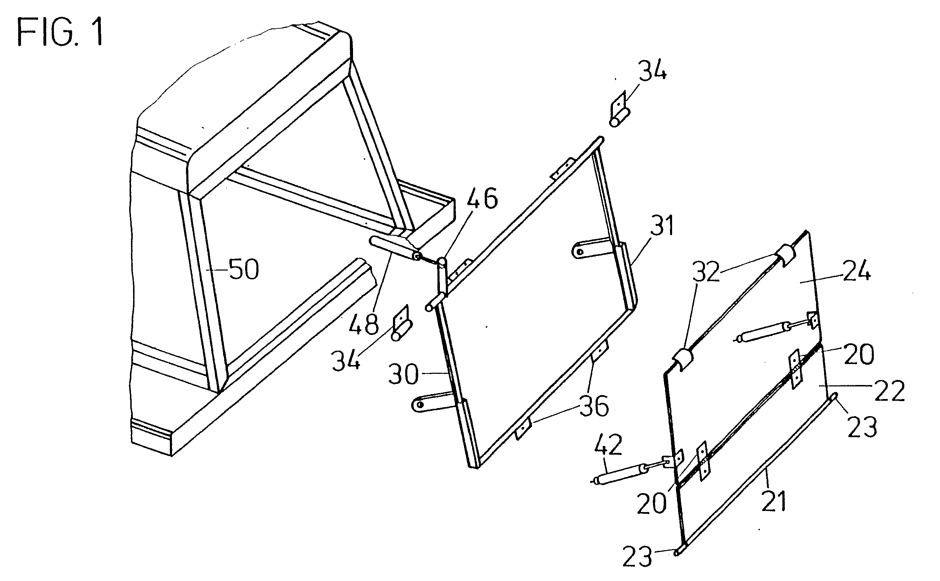

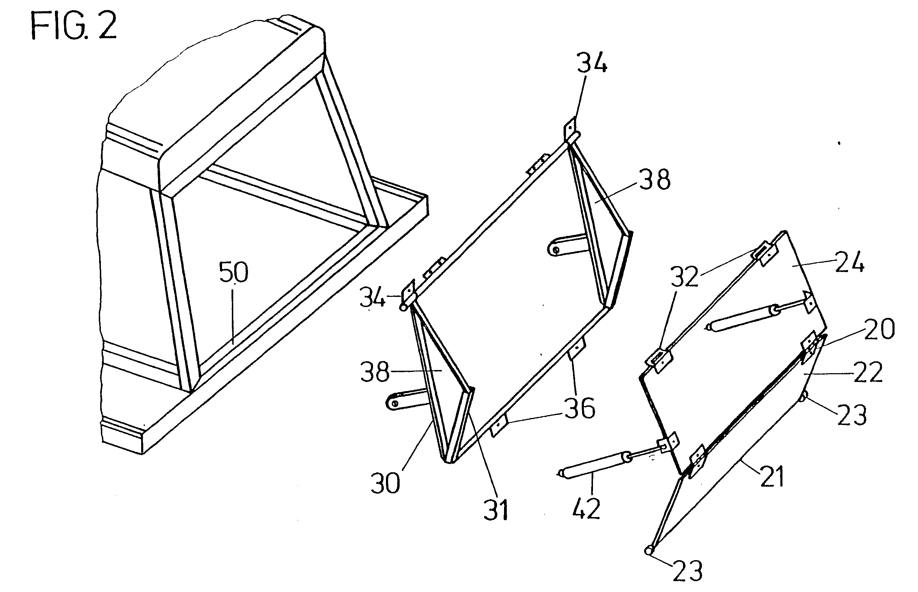

Die Fig. 1 und 2 sind bezüglich ihrer einzelnen Teile nach Art einer Explosionsdarstellung auseinandergerückt dargestellt zum besseren Verständnis. Für gleiche Teile wurden in beiden Figuren gleiche Bezugszeichen benutzt.

Das rechts befindliche Teil ist das eigentliche Fensterteil, das aus einem unteren Fensterteil 22 und einem oberen Fensterteil 24 besteht. Beide Teile sind gelenkig miteinander verbunden, wobei zwei an das Glas angebrachte Gelenkstücke ein Gelenk 20 bilden. Anstelle der Gelenkstücke kann auch ein in die beiden Glaskanten eingelassenes Kunststoffband vorgesehen sein, das eine besonders abdichtende Ausführungsform gewährleistet. Das untere Fensterteil 22 läuft in eine Unterkante 21 aus, die links und rechts überstehende Führungsteile 23 aufweist, wie sie etwa für Schlittenführungen in einer U-förmigen Schiene geeignet sind.

In der Mitte der Fig. 1 und 2 ist jeweils ein Rahmen 30 sichtbar, der normalerweise aus lackiertem Metallblech hergestellt ist und eine aus U-förmig ausgebildeten Führungsschienen bestehende Führungsvorrichtung 31 aufweist, deren U-Profile nach innen gerichtet sind und etwa in der Rahmenmitte enden. Falls jedoch eine größere Öffnungsweite gewünscht ist, können diese Führungsschienen sich auch weiter nach oben erstrecken. Vorbereitete Anschlüsse zum Aufbringen des Rahmens 30 auf einem rückseitigen Kabinengrundrahmen 50 sind mit 36 unten angedeutet und mit 34 oben, wobei es sich oben — wie in Fig. 2 gezeichnet — um zwei Hülsen mit Befestigungslasche handeln kann, in denen ein beiderseits verlängerter oberer Quersteg des Rahmens 30 so gelagert ist, daß die gesamte Baueinheit verschwenkbar und ausstellbar ist. Das obere Fensterteil 24 ist seinerseits mittels zweier Scharniere 32 am oberen Quersteg des Rahmens 30 befestigt.

Der Rahmen 30 kann den rückseitigen Kabinengrundrahmen 50 im linken Figurenteil abdichten. Der obere Fensterteil 24 weist zwei nach hinten gerichtete Stege auf, in welche hydraulische Arbeitszylinder 42 verankert werden können, derart, daß die Öffnung und Bewegung des Fensters durch Kraftantrieb erfolgt. Grundsätzlich ist auch eine elektrische oder manuelle Bedienung möglich.

Werden die Arbeitszylinder hydraulisch betätigt zum Öffnen des Fensters, so schiebt sich der Kolben aus dem Zylinder heraus, d. h. in den Figuren nach rechts. Infolge der kraftschlüssigen Verbindung von oberem Fensterteil 24 und unterem Fensterteil 22 verändert sich nun der Winkel der beiden Fensterteile zueinander und das untere Fensterteil bewegt sich unter Ausstellung nach oben in Abhängigkeit vom Austrittsmaß des Arbeitskolbens. Die zur Bedienung, Öffnung und auch Verriegelung notwendigen Elemente sind grundsätzlich bekannt, so daß deren nähere Ausbildung nicht beschrieben zu werden braucht. Zum Ausstellen des gesamten Basisrahmens um die Anschlüsse 34 mittels Kraftantrieb dient ein nur in Figur 1 gezeigter Arbeitszylinder 48, dessen Kolben auf einen Hebel 46 wirkt.

Im Falle der gewinkelten Ausführungsform gemäß Fig. 2 ist zu ergänzen, daß dort die beiden dreieckförmigen Seitenflächen 38 vorzugsweise mit einer Blechfüllung versehen sind, jedoch ist auch Verglasung denkbar, je nach den erforderlichen Sichtverhältnissen. Die Fensterteile 22 und 24 können nochmals einen Kunststoffrahmen aufweisen, jedoch sind auch andere, ausreichende Dichtigkeit mit dem Rahmen 30 im geschlossenen Zustand gewährleistende Ausgestaltungen in rahmenloser Ausführung möglich. Die Scharniere 32 und die für das Gelenk 20 lassen sich u. a. in Klebetechnik an den Glasteilen befestigen.

Bei einer Variante der in Fig. 2 gezeigten winkeligen Ausführungsform ist die Führung des unteren Fensterteils 22 so ausgebildet, daß beim Öffnen desselben ein Verschieben ohne Ausstellung in Richtung der Führungsschienen erfolgt, wozu die Führungsschienen teleskopartig ausgeführt sein können, um dem unteren Fensterteil 22 auch noch bei Erreichen der Spitze des Dreiecks ausreichende Richtungsstabilität zu verleihen.

Die obere Drehachse mit den Scharnieren 32 ist hierbei so ausgeführt, daß das obere Fensterteil 24 — soweit nötig — sich um die Drehachse verschwenkend in den Kabinendachbereich hineinbewegen kann.

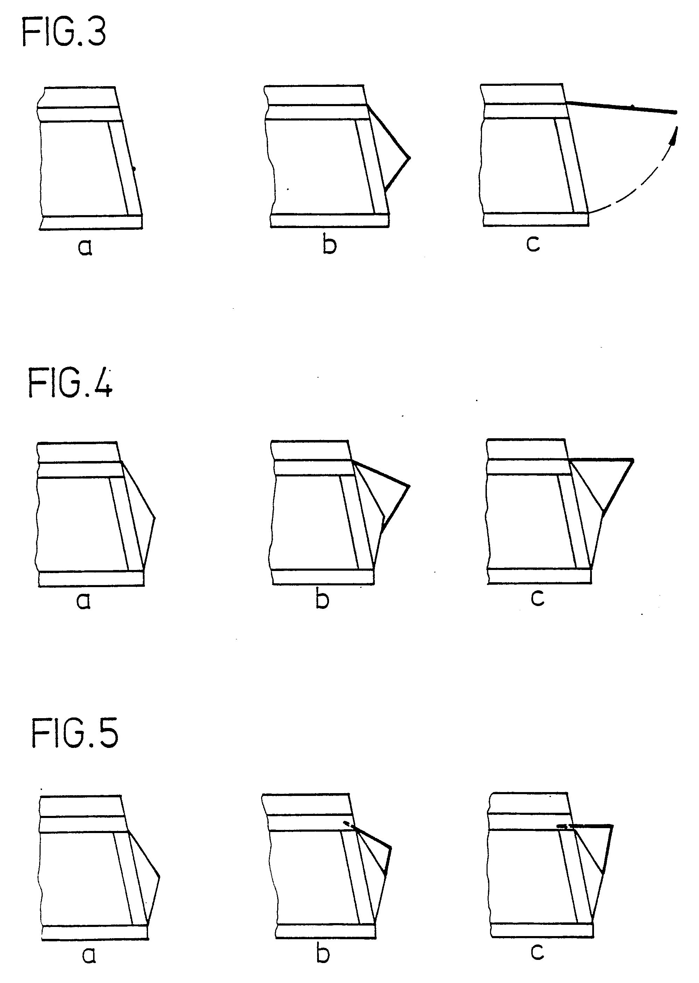

Die Fig. 3 bis 5 veranschaulichen drei verschiedene Stellungen bzw. Möglichkeiten a) bis c) im Falle der beiden Ausführungsformen nach Fig. 1 und 2 sowie einer Schiebevariante.

Im einzelnen zeigt Fig. 3 drei verschiedene Positionen der ebenflächigen Ausführungsform, und zwar zeigt Figurenteil a) den geschlossenen Zustand, Figurenteil b) den fast geöffneten Zustand, hervorgerufen durch Ausstellung des oberen Fensterteils 24. Der Figurenteil c) zeigt das Ausstellen der gesamten Baueinheit einschließlich des Rahmens 30 um die Anschlüsse 34. Soweit diese Variante verwirklicht ist, müssen die in Fig. 1 gezeigten Anschlüsse 36 entfallen bzw. statt dessen ein von innen zu öffnender Schnellverschluß vorhanden sein.

Fig. 4 bezieht sich auf drei verschiedene Öffnungszustände der winkeligen Ausführungsform, wobei Figurenteil a) den geschlossenen Zustand, Figurenteil b) den halb geöffneten und Figurenteil c) den vollständig geöffneten Zustand darstellen.

Entsprechendes gilt im Falle der Fig. 5, welche drei verschiedene Öffnungzustände der zur gewinkelten Ausführungsform gehörigen Schiebevariante zeigt. Wie schon aus den Figuren ersichtlich, hat letztere den Vorteil, daß sowohl von innen als auch von außen (in bezug auf dicht am Schlepper zu befestigende Geräte) ein erheblicher Freiheitsraum im geschlossenen und geöffneten Zustand vorhanden ist.

**Patentansprüche**

1. Rückfenster für die Fahrerkabine eines landwirtschaftlichen Schleppers mit einer waagrecht verlaufenden, als Gelenk (20) ausgebildeten Fensterteilung, wobei beide Fensterteile (22, 24) im geschlossenen Zustand an einem Rahmen (30) anliegen und beim Öffnen das obere Fensterteil (24) um eine obere Drehachse (32) nach oben bewegbar ist und die Unterkante (21) des unteren Fensterteils (22) in mindestens einer an der Längsseite des Rahmens befestigten Führungsvorrichtung (31) geführt ist, dadurch gekennzeichnet, daß die Führungsvorrichtung (31) ortsfest angeordnet und die Unterkante (21) des unteren Fensterteils (22) in der Führungsvorrichtung (31) verschiebbar ist.

2. Rückfenster nach Anspruch 1, dadurch gekennzeichnet, daß die Fensterteile (22, 24) und der Rahmen (30) eine montierbare Einheit bilden, die mit vorbereiteten Anschlüssen (34, 36) zum dichten Aufbringen auf den rückseitigen Kabinengrundrahmen (50) versehen ist.

3. Rückfenster nach Anspruch 1 oder 2, dadurch gekennzeichnet, daß die Unterkante (21) des unteren Fensterteils (22) seitlich links und rechts herausragende Führungsteile (23) für Schlittenführungen aufweist, die in der aus zwei U-förmigen Schienen bestehenden Führungsvorrichtung (31) verschiebbar sind.

4. Rückfenster nach einem oder mehreren der vorherigen Ansprüche, dadurch gekennzeichnet, daß die Führungsvorrichtung (31) einen Teil des Rahmens (30) einer ebenflächigen Baueinheit bildet und parallel zum rückseitigen Kabinengrundrahmen (50) verläuft.

5. Rückfenster nach einem oder mehreren der Ansprüche 1 bis 3, dadurch gekennzeichnet, daß die beiden Fensterteile· (22, 24) in ihrer Grundstellung mit dem ebenflächigen Rahmen (30) einen nach außen gerichteten Winkel von etwa 10 bis 30 Grad bilden, wobei die dementsprechend gebildeten, etwa die Form eines gleichseitigen Dreiecks aufweisenden Seitenflächen (38) vorzugsweise verglast sind und die Spitze des Dreiecks mit dem Gelenk (20) zusammenfällt.

6. Rückfenster nach Anspruch 5, dadurch gekennzeichnet, daß die Führungsvorrichtung (31) sich zumindest von der Unterkante (21) des unteren Fensterteils (22) bis zur Spitze des Dreiecks erstreckt.

7. Rückfenster nach einem oder mehreren der Ansprüche 1 bis 6, dadurch gekennzeichnet, daß der Rahmen (30) mit den Fensterteilen (22, 24) um einen oberen in Kabinendachnähe befindlichen Anschluß (34) vertikal verschwenkbar und ausstellbar ist.

8. Rückfenster nach einem oder mehreren der Ansprüche 1 bis 7, dadurch gekennzeichnet, daß der untere Fensterteil (22) im Bereich der Führungsvorrichtung (31) stufenlos höhenverstellbar ist.

9. Rückfenster nach einem oder mehreren der Ansprüche 1 bis 8, dadurch gekennzeichnet, daß die Öffnung und Bewegung des Fensters durch einen Kraftantrieb (42) erfolgt.

10. Rückfenster nach einem oder mehreren der vorherigen Ansprüche, dadurch gekennzeichnet, daß der obere Fensterteil (24) teilweise in den Kabinendachbereich einschiebbar ist.

**Claims**

1. A rear window for the driver cabin of an agricultural tractor having a horizontally extending window division in the form of a hinge means (20), wherein both window portions (22, 24) lie against a frame (30) in the closed condition and when the window is opened the upper window portion (24) is movable upwardly about an upper pivot axis (32) and the lower edge (21) of the lower window portion (22) is guided in at least one guide means (31) fixed to the longitudinal side of the frame, characterised in that the guide means (31) is stationary and the lower edge (21) of the lower window portion (22) is slidable in the guide means (31).

2. A rear window according to claim 1 characterised in that the window portions (22, 24) and the frame (30) form an installable unit which is provided with prepared connecting means (34, 36) for being sealingly mounted to the rear main frame (50) of the cabin.

3. A rear window according to claim 1 or claim 2 characterised in that the lower edge (21) of the lower window portion (22) has guide portions (23), which project laterally on the left and on the right, for slide guides which are slidable in the guide means (31) which consists of two U-shaped rails.

4. A rear window according to one or more of the preceding claims characterised in that the guide means (31) forms a part of the frame (30) of a flat-surfaced unit and extends parallel to the rear main frame (50) of the cabin.

5. A rear window according to one or more of claims 1 to 3 characterised in that the two window portions (22, 24), in their basic position, form an outwardly directed angle of about 10 to 30°, to the flat-surfaced frame (30), wherein the correspondingly formed side surfaces (38) which are approximately in the form of an equilateral triangle are preferably glazed and the apex of the triangle coincides with the hinge means (20).

6. A rear window according to claim 5 characterised in that the guide means (31) extends at least from the lower edge (21) of the lower window portion (22) to the apex of the triangle.

7. A rear window according to one or more of claims 1 to 6 characterised in that the frame (30) with the window portions (22, 24) can be vertically pivoted and displaced outwardly about an upper connecting means (34) disposed in the vicinity of the cabin roof.

8. A rear window according to one or more of claims 1 to 7 characterised in that the lower window portion (22) is steplessly adjustable in respect of height in the region of the·guide means (31).

9. A rear window according to one or more of claims 1 to 8 characterised in that opening and movement of the window is produced by a power drive means (42).

10. A rear window according to one or more of the preceding claims characterised in that the upper window portion (24) can be partially shifted into the cabin roof region.

## Revendications

1. Fenêtre arrière pour la cabine de conduite d'un tracteur agricole comportant une division s'étendant horizontalement, réalisée sous la forme d'une articulation (20), les deux parties de fenêtre (22, 24) étant, à l'état fermé, au contact d'un châssis (30), tandis que, lors de l'ouverture, la partie de fenêtre supérieure (24) peut monter en se déplaçant autour d'un axe de rotation supérieur (32) et le bord inférieur (21) de la partie de fenêtre inférieure (22) est guidé dans au moins un dispositif de guidage (31) fixé au côté longitudinal du châssis, caractérisée en ce que le dispositif de guidage (31) est disposé fixement et en ce que le bord inférieur (21) de la partie de fenêtre inférieure (22) peut être déplacé dans le dispositif de guidage (31).

2. Fenêtre arrière suivant la revendication 1, caractérisée en ce que les parties de fenêtre (22, 24) et le châssis (30) constituent une unité modulaire pouvant être montée, qui comporte des éléments de raccordement (34, 36) prévus à l'avance pour le montage étanche sur le châssis de base postérieur (50) de la cabine.

3. Fenêtre arrière suivant la revendication 1 ou 2, caractérisée en ce que le bord inférieur (21) de la partie de fenêtre inférieure (22) comporte des éléments de guidage (23) pour des guides de chariot dépassant latéralement à gauche et à droite, qui peuvent être déplacés dans le dispositif de guidage (31) comprenant deux rails en U.

4. Fenêtre arrière suivant une ou plusieurs des revendications précédentes, caractérisée en ce que le dispositif de guidage (31) fait partie du châssis (30) d'une unité modulaire à surface plane et s'étend parallèlement au châssis de base postérieur (50) de la cabine.

5. Fenêtre arrière suivant une ou plusieurs des revendications 1 à 3, caractérisée en ce que les deux parties de fenêtre (22, 24) font dans leur position de base, avec le châssis à surface plane (30), un angle dirigé vers l'extérieur d'environ 10 à 30 degrés, les surfaces latérales (38) conformées corrélativement, présentant sensiblement la forme d'un triangle isocèle, étant, de préférence, vitrées et le sommet du triangle coïncidant avec l'articulation (20).

6. Fenêtre arrière suivant la revendication 5, caractérisée en ce que le dispositif de guidage (31) s'étend au moins du bord inférieur (21) de la partie de fenêtre inférieure (22) au sommet du triangle.

7. Fenêtre arrière suivant une ou plusieurs des revendications 1 à 6, caractérisée en ce que le châssis (30) peut pivoter verticalement et être redressé avec les parties de fenêtre (22, 24) autour d'un élément de raccordement supérieur (34) se trouvant au voisinage du toit de la cabine.

8. Fenêtre arrière suivant une ou plusieurs des revendications 1 à 7, caractérisée en ce que la partie de fenêtre inférieure (22) peut être déplacée en hauteur de façon continue dans la zone du dispositif de guidage (31).

9. Fenêtre arrière suivant une ou plusieurs des revendications 1 à 8, caractérisée en ce que l'ouverture et le déplacement de la fenêtre sont effectués par un entraînement mécanique (42).

10. Fenêtre arrière suivant une ou plusieurs des revendications précédentes, caractérisée en ce que la partie de fenêtre supérieure (24) peut être insérée partiellement dans la zone du toit de la cabine.

FIG. 1

FIG. 2

FIG.3

a        b        c

FIG.4

a        b        c

FIG.5

a        b        c